# EUROPEAN PATENT SPECIFICATION

(11) **EP 0 806 132 B1**
(45) Date of publication and mention of the grant of the patent: **27.08.2003**
(21) Application number: 97201327.0
(22) Date of filing: 02.05.1997
(51) Int. Cl.: A01D 67/00

(54) **An agricultural machine**
Landwirtschaftliche Maschine
Machine agricole

(30) Priority: 09.05.1996 EP 96201273
(43) Date of publication of application: 12.11.1997
(73) Proprietor: MAASLAND N.V., 3155 PD Maasland (NL)
(72) Inventor: Koorn, Maarten, 3123 CP Schiedam (NL)
(74) Representative: Corten, Maurice Jean F.M.

(56) References cited:
- EP-A- 0 406 961
- EP-A- 0 429 383
- EP-A- 0 509 306
- DE-A- 4 407 576
- GB-A- 2 173 382

## Description

The present invention relates to an agricultural machine according to the preamble of claim 1.

Such machines are known, for example from EP-A-0406961. When these machines are operative, they will be subjected to sideward forces directed to a vertical plane extending, through the coupling point of the machine to the tractor, in the direction of travel. Due to these forces, the means for keeping the machine at the side of the tractor will be heavily loaded. For the purpose of compensating these forces, it is known to accommodate wheels supporting the frame in said frame in such a manner that they are in a somewhat tilted position, i.e. in a position in which they are orientated some degrees outwardly. When the machine is active on a slope, the perpendicular centre plane forming an angle relative to a vertical plane extending in the direction of travel, the above-mentioned forces, which have a tendency to bring the machine behind the tractor, will be greater, and, in order to obtain the same compensation of these forces, the angle at which the supporting members are extending outwardly will have to be greater.

In order to obtain an effective solution for said problems, the machine of the sort as defined above comprises the features of the characterizing part of claim 1. Due to this, in the operative position, the wheels will take automatically a position in which they are tilted outwardly, while the magnitude of the angle which the wheels will form relative to the direction of travel will depend on the magnitude of the inwardly directed forces acting on the machine. In this manner, when the machine is moved obliquely across a slope, the position of the wheels will be more tilted than in a situation in which the machine is moved over a flat piece of land. By means of the locking mechanism the position of the wheels relative to the carrier beam can be locked in the transport position.

It is known per se from EP-A-0509306 that in the operative position the outer supporting member is pivotable about a pivot shaft. However this machine can only be pivoted into an operative position on one side behind the tractor.

When the machine is supported by two wheels, the coupling point of the machine to the tractor may serve as a third support. When the machine is active in its operative position, the centre of gravity of the machine will be located close to the outside of the imaginary triangle defined by said three supporting points, which will result in that the force by which the machine is supported on the ground via the outer wheel will be considerably greater than the force by which it is supported on the ground via the inner wheel. For that reason, it may be sufficient only to mount the wheel, being in the operative position of the machine the outer one, as a pivotable one and to mount the wheel, being in the operative position of the machine the inner one, in a fixed position, e.g. in the direction of travel. However, in that situation it will be more advantageous to mount both wheels pivotably about an upwardly extending pivot shaft located behind the centre of gravity of the relevant wheel.

In order to avoid that, by unevennesses in the ground, the wheels will take an arbitrary position, e.g. transversely to the direction of travel, in accordance with the invention the pivotable wheel is freely pivotable through a certain angle. In that case it will not be possible for the wheel to take a more tilted position than that determined by said angle. Depending on the land on which the machine is active, this angle will be greater or smaller; hence, also in accordance with the invention, the pivotable wheel may be pivotable through an adjustable angle. This angle may be in the range of approximately +10° to approximately -10° relative to a plane extending through the upwardly extending pivot shaft in the direction of travel.

In order to obtain a stable setting of the wheel position, also when the machine is brought into the transport position, there may be provided a spring member between the carrier frame and the carrier beam on both sides of the pivot shaft.

In a particular embodiment, the frame is supported by at least two wheels, which are both pivotable about a pertaining pivot shaft located behind a relevant wheel shaft.

It will be obvious that the frame supporting constructions as described above may apply to various types of agricultural machines. In accordance with the invention, the crop moving unit may in particular be constituted by a mowing unit, whether or not together with a crushing unit, or by a bale press or a tedder.

For a better understanding the invention will further be described with the aid of the accompanying drawing, in which:
Figure 1 shows schematically the coupling of a mowing and crushing unit in a frame which is drawn by a tractor on the left and the right therebehind and which is supported by pivotable wheels; and
Figure 2 shows schematically the pivotal construction for the wheels.

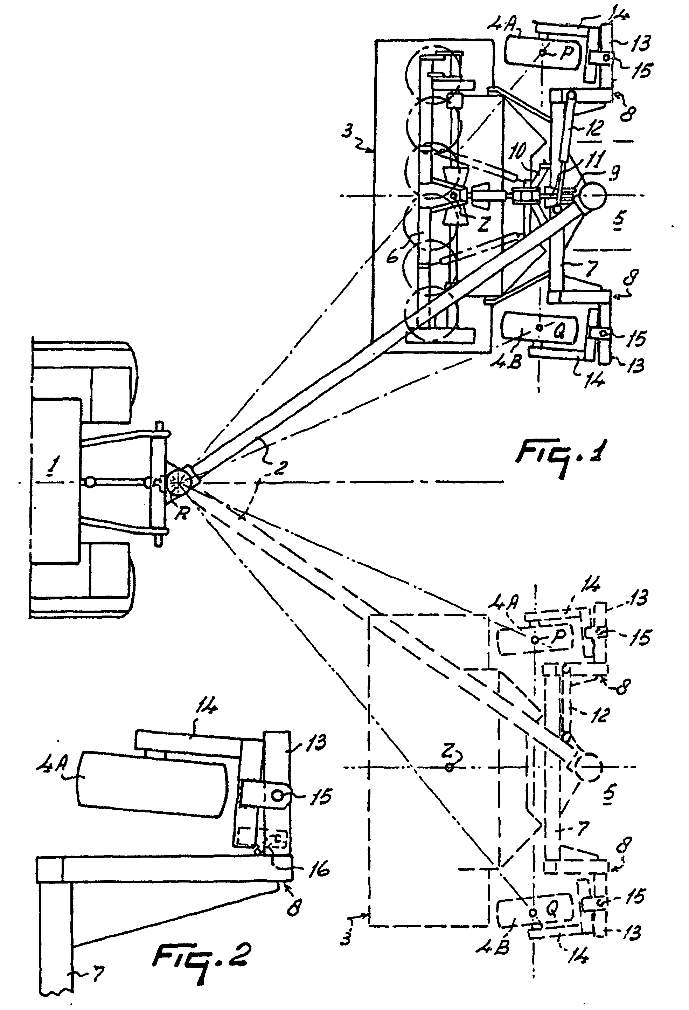

The mowing machine combination represented in Figure 1 shows a tractor 1, behind which there is coupled a mowing machine combination 3 by means of a drawbar 2. Said mowing machine combination 3 comprises a mowing unit

It will be obvious that the frame supporting constructions as described above may apply to various types of agricultural machines. In accordance with the invention, the crop moving unit may in particular be constituted by a mowing unit, whether or not together with a crushing unit, or by a bale press or a tedder.

For a better understanding the invention will further be described with the aid of the accompanying drawing, in which:
Figure 1 shows schematically the coupling of a mowing and crushing unit in a frame which is drawn by a tractor on the left and the right therebehind and which is supported by pivotable wheels; and
Figure 2 shows schematically the pivotal construction for the wheels.

The mowing machine combination represented in Figure 1 shows a tractor 1, behind which there is coupled a mowing machine combination 3 by means of a drawbar 2. Said mowing machine combination 3 comprises a mowing unit and a crushing unit and may be produced so as to be capable of being coupled to a frame 5 supported by wheels 4.

The mowing machine combination 3 is suspended in a further frame 6. Said further frame 6 is connected with the aid of coupling means to the frame 5 supported by the wheels 4. The frame 5 comprises a substantially horizontal carrier beam 7 extending transversely to the direction of travel, at whose sides there are disposed wheel supports 8. In said wheel supports 8 the wheels 4 are pivotably bearing-supported in a manner which will be further detailed. Near the centre of the carrier beam 7 there is provided a supporting plate 9 connected thereto and a trestle 10 constituting part of the frame 5, which trestle 10 is hinged at its lower ends relative to the carrier beam 7. The upper end of said trestle 10 is connected to the upper portion of the supporting plate 9 by means of a connecting rod 11 which is adjustable in length. By means of said connecting rod 11 the position of the trestle 10 can be adjusted.

The way in which the mowing machine combination 3 suspended in the frame 6 is coupled to the frame 5 and the trestle 10, as well as the way in which the agricultural machine may be coupled behind the tractor 1 on the left and the right thereof, and the way in which the drive of the mowing unit and the crushing unit is connected with the power take-off shaft of the tractor has already been described in EP-A-0 406 961, whose contents constitutes part of the present description of the figure. However, also in this case it is noticed that the drawbar 2 is movably connected to the frame 5, at a place which is located approximately in the centre plane of the machine extending in the direction of travel. By means of a control cylinder 12, which is active between the drawbar 2 and the frame 5, the machine is pivotable into an operative position both on the left and the right behind the tractor, as well as into a transport position approximately in the middle behind the tractor.

The mowing machine combination is supported on the ground in the points P and Q by means of the wheels and is supported on the tractor in the coupling point R of the drawbar 2 to the tractor 1. In the operative position indicated by unbroken lines, the centre of gravity Z of the mowing machine combination relative to the triangle defined by the points P, Q and R is located relatively close to the line PR and, in the operative position indicated by broken lines, said centre of gravity Z is located relatively close to the line QR. The machine is supported on the ground substantially by means of the wheel 4A in the former operative position and substantially by the wheel 4B in the latter operative position, in other words by the wheel being in the relevant operative position the outer one.

When the machine is moved behind the tractor at the side thereof, the machine is subjected to forces causing same to incline in the direction straight behind the tractor. In order to compensate said forces, the wheel being in the relevant operative position the outer one has to be orientated somewhat obliquely outwards. As already mentioned in the introductive part of the description, it may be desirable under certain circumstances, in particular on a highly sloping piece of land, not to secure this tilted position of at least the wheel 4A or 4B being in the operative position the outer one. The position of the wheel being in the operative position the inner one is of less importance, because the machine is supported on the ground via the latter wheel only to a limited extent.

When the machine has to be brought from an operative position behind the tractor on the left into an operative position behind the tractor on the right and vice versa, it may be important to secure neither of the two wheels 4A and 4B. For this reason, in the embodiment shown in Figure 1, both wheels 4A and 4B are freely pivotable. By bringing the pivot point behind the centre of gravity of the wheels or even, as shown in this figure, behind the wheels, the latter will automatically take a position which is projecting outwardly in such a way that the forces tending to draw the machine inwardly will be compensated to a considerable extent. For that purpose the wheel supports 8 comprise a carrier beam 13 constituting a fixed part of the frame 5, a carrier frame 14 extending forwardly relative to said carrier beam, which carrier frame 14 is pivotable about an upwardly extending pivot shaft 15 relative to the carrier beam 13. The wheels 4A and 4B are pivotably bearing-supported in the respective carrier frames 14. Although the wheels 4A and 4B in Figure 1 are freely pivotable through a certain angle, it will also be possible to have them pivot through an adjustable angle. This angle will preferably be in the range of approximately +10° to approximately -10°, relative to a plane extending through the upwardly extending pivot shaft 15 in the direction of travel. If desired, it will also be possible to dispose a spring member between the carrier frame 14 and the carrier beam 13 on both sides of the pivot shaft 15, which will contribute to a stable setting in the transport position. The wheels can be locked in the transport position by means of a locking mechanism 16 represented in Figure 2, showing an enlarged view of a wheel support.

The invention is not restricted to the aforementioned embodiments, but also relates to all sorts of modifications thereof, in particular those already mentioned in the preamble of the description and, of course, being within the scope of the following claims.

## Claims

1. An agricultural machine comprising a frame (5) including supporting members constituted by wheels (4A,4B), to which frame (5) there is fastened a crop moving unit, the machine further being provided with a drawbar (2) for its connection to a tractor (1), said agricultural machine being pivotable into an operative position behind the tractor (1) both on the left and the right side thereof, and substantially behind the tractor (1) in the transport position, said drawbar (2) being movably connected to the frame (5) at a place located approximately in the centre plane of the machine extending in the direction of travel, said wheels (4) having wheel shafts being bearing-supported in a carrier frame (14) which is pivotable about the upwardly extending pivot shaft (15) relative to a carrier beam (13) pertaining to the frame (5), **characterized in that** at least the supporting member, being in one of the operative positions of the machine the outer one, is pivotable about an upwardly extending pivot shaft (15) located behind the centre of gravity of the outer supporting member, and **in that** there is provided a locking mechanism (16) enabling to lock the position of the wheel (4) relative to the carrier beam (13) in the transport position.

2. An agricultural machine as claimed in claim 1, **characterized in that** the pivotable supporting member is freely pivotable through a certain angle.

3. An agricultural machine as claimed in claim 1 or 2, **characterized in that** the pivotable supporting member is pivotable through an adjustable angle.

4. An agricultural machine as claimed in claim 2 or 3, **characterized in that** the angle is in the range of approximately +10° to approximately -10° relative to a plane extending through the upwardly extending pivot shaft (15) in the direction of travel.

5. An agricultural machine as claimed in claim 1, **characterized in that** there is provided a spring member between the carrier frame (14) and the carrier beam (13) on both sides of the pivot shaft (15).

6. An agricultural machine as claimed in any one of the preceding claims, **characterized in that** the frame (5) is supported by at least two wheels (4A, 4B) which are both pivotable about a pertaining pivot shaft (15) located behind a relevant wheel shaft.

7. An agricultural machine as claimed in any one of the preceding claims, **characterized in that** a mowing unit is mounted in the frame (5).

8. An agricultural machine as claimed in any one of the preceding claims, **characterized in that** a crushing unit is mounted in the frame (5).

9. An agricultural machine as claimed in any one of claims 1 to 7, **characterized in that** said agricultural machine is designed as a bale press.

## Patentansprüche

1. Landwirtschaftliche Maschine mit einem Rahmen (5), der aus Rädern (4A, 4B) bestehende Stützglieder enthält, wobei an dem Rahmen (5) eine Gutverlagerungseinheit befestigt ist, wobei die Maschine ferner mit einer Zugschiene (2) zum Anschluß an einen Schlepper (1) versehen ist, wobei die landwirtschaftliche Maschine in eine Arbeitslage hinter dem Schlepper (1) schwenkbar ist, und zwar sowohl links als auch rechts von diesem, und im wesentlichen hinter dem Schlepper (1) in die Transportlage schwenkbar ist, wobei die Zugschiene (2) mit dem Rahmen (5) an einer Stelle beweglich verbunden ist, die etwa in der sich in Arbeitsrichtung erstreckenden Mittelebene der Maschine liegt, wobei die Räder (4) Radachsen aufweisen, die in einem Tragrahmen (14) gelagert und gehalten sind, der relativ zu einem zu dem Rahmen (5) gehörenden Träger (13) um die aufwärts gerichtete Schwenkachse (15) schwenkbar ist,
**dadurch gekennzeichnet, daß** zumindest das Stützglied, das in einer der Arbeitslagen der Maschine das äußere ist, um eine aufwärts gerichtete Schwenkachse (15) schwenkbar ist, die hinter dem Schwerpunkt des äußeren Stützgliedes liegt, und daß ein Verriegelungsmechanismus (16) vorgesehen ist, der es ermöglicht, die Position des Rades (4) relativ zu dem Träger (13) in der Transportlage zu verriegeln.

2. Landwirtschaftliche Maschine nach Anspruch 1,
**dadurch gekennzeichnet, daß** das schwenkbare Stützglied über einen bestimmten Winkel frei schwenkbar ist.

3. Landwirtschaftliche Maschine nach Anspruch 1 oder 2,
**dadurch gekennzeichnet, daß** das schwenkbare Stützglied über einen einstellbaren Winkel schwenkbar ist.

4. Landwirtschaftliche Maschine nach Anspruch 2 oder 3,
**dadurch gekennzeichnet, daß** der Winkel im Bereich von etwa +10° bis etwa -10° relativ zu einer Ebene liegt, die sich durch die aufwärts gerichtete Schwenkachse (15) in Arbeitsrichtung erstreckt.

5. Landwirtschaftliche Maschine nach Anspruch 1,
**dadurch gekennzeichnet, daß** zwischen dem Tragrahmen (14) und dem Träger (13) auf beiden Seiten der Schwenkachse (15) eine Feder angeordnet ist.

6. Landwirtschaftliche Maschine nach einem der vorhergehenden Ansprüche,
**dadurch gekennzeichnet, daß** der Rahmen (5) durch mindestens zwei Räder (4A, 4B) abgestützt ist, die beide um eine zugehörige Schwenkachse (15) schwenkbar sind, die hinter einer entsprechenden Radachse liegt.

7. Landwirtschaftliche Maschine nach einem der vorhergehenden Ansprüche,
**dadurch gekennzeichnet, daß** an dem Rahmen (5) ein Mähwerk angebracht ist.

8. Landwirtschaftliche Maschine nach einem der vorhergehenden Ansprüche,
**dadurch gekennzeichnet, daß** an dem Rahmen (5) ein Konditionierer angebracht ist.

9. Landwirtschaftliche Maschine nach einem der Ansprüche 1 bis 7,
**dadurch gekennzeichnet, daß** die landwirtschaftliche Maschine als Ballenpresse ausgeführt ist.

## Revendications

1. Machine agricole comportant un châssis (5) comprenant des éléments de support constitués de roues (4A, 4B), châssis sur lequel (5) est fixée une unité de déplacement de récolte, la machine étant en outre dotée d'une barre d'attelage (2) pour sa connexion à un tracteur (1), ladite machine agricole pouvant être pivotée dans une position de fonctionnement derrière le tracteur (1) sur les côtés gauche et droit de celui-ci, et sensiblement derrière le tracteur (1) dans la position de transport, ladite barre d'attelage (2) étant reliée de façon amovible au châssis (5) à un endroit situé approximativement dans le plan central de la machine s'étendant dans le sens du déplacement, lesdites roues (4) ayant des essieux supportés par un palier dans un châssis porteur (14) qui peut être pivoté autour de l'axe de pivot s'étendant vers le haut (15) par rapport à une poutre porteuse (13) appartenant au châssis (5), **caractérisée en ce qu'**au moins l'élément de support, étant dans l'une des positions de fonctionnement de la machine, celle vers l'extérieur, peut être pivoté autour d'un axe de pivot s'étendant vers le haut (15) situé derrière le centre de gravité de l'élément de support externe, et **en ce qu'**il est fourni un mécanisme de verrouillage (16) permettant de verrouiller la position de la roue (4) par rapport à la poutre porteuse (13) dans la position de transport.

2. Machine agricole telle que définie dans la revendication 1, **caractérisée en ce que** l'élément de support pivotant peut être pivoté librement selon un certain angle.

3. Machine agricole selon la revendication 1 ou 2, **caractérisée en ce que** l'élément de support pivotant peut être pivoté selon un angle ajustable.

4. Machine agricole selon la revendication 2 ou 3, **caractérisée en ce que** l'angle se situe dans la plage d'environ +10° à environ -10° par rapport à un plan s'étendant à travers l'axe de pivot s'étendant vers le haut (15) dans le sens du déplacement.

5. Machine agricole selon la revendication 1, **caractérisée en ce qu'**il est prévu un élément de ressort entre le châssis porteur (14) et la poutre porteuse (13) sur les deux côtés de l'axe de pivot (15).

6. Machine agricole selon l'une quelconque des revendications précédentes, **caractérisée en ce que** le châssis (5) est supporté par au moins deux roues (4A, 4B) qui peuvent toutes deux être pivotées autour d'un axe de pivot correspondant (15) situé derrière un essieu approprié.

7. Machine agricole selon l'une quelconque des revendications précédentes, **caractérisée en ce qu'**une unité de fauchage est montée dans le châssis (5).

8. Machine agricole selon l'une quelconque des revendications précédentes, **caractérisée en ce qu'**une unité de broyage est montée dans le châssis (5).

9. Machine agricole selon l'une quelconque des revendications 1 à 7, **caractérisée en ce que** ladite machine agricole est conçue comme une presse à balles.
